Europäisches Patentamt

European Patent Office

Office européen des brevets

(19)

(11) Numéro de publication : **0 167 457**
**B1**

(12) **FASCICULE DE BREVET EUROPÉEN**

(45) Date de publication du fascicule du brevet :
**11.10.89**

(51) Int. Cl.⁴ : **F 16 H 55/18**

(21) Numéro de dépôt : **85401344.8**

(22) Date de dépôt : **03.07.85**

(54) **Procédé et dispositif pour le rattrapage automatique des jeux dans les systèmes de transmission à engrenage.**

(30) Priorité : **05.07.84 FR 8410680**

(43) Date de publication de la demande :
**08.01.86 Bulletin 86/02**

(45) Mention de la délivrance du brevet :
**11.10.89 Bulletin 89/41**

(84) Etats contractants désignés :
**CH DE FR GB IT LI SE**

(56) Documents cités :
**DE–A– 2 528 466**
**FR–A– 1 378 243**
**US–A– 1 804 906**
**US–A– 2 845 809**
**US–A– 3 127 784**
**US–A– 3 803 936**

(73) Titulaire : **Damas, James**
**13, La Lisière du Golf**
**F-92380 Garches (FR)**

(72) Inventeur : **Damas, James**
**13, La Lisière du Golf**
**F-92380 Garches (FR)**

EP 0 167 457 B1

## Description

L'invention concerne les systèmes de transmission à engrenages et plus particulièrement le rattrapage automatique des jeux de fonctionnement de ces systèmes de transmission.

Bien que non limitée à cette application, elle trouve une utilisation particulièrement intéressante dans le cas de réducteurs comportant un arbre primaire ou arbre menant solidaire en rotation d'au moins un pignon en prise avec un pignon entraîné d'un arbre secondaire ou arbre mené. Dans ce type de dispositif, il existe en fonctionnement un certain jeu dans la denture qui entraîne une perte de précision dans le positionnement de l'arbre mené. De plus, ce jeu s'accroît avec le temps à cause de l'usure et l'on risque alors un mauvais fonctionnement.

Il existe des dipositifs comme celui décrit dans le brevet U.S.A. 1 804 906 qui permettent de compenser un jeu mécanique en orientant le sens du jeu, et encore dans un seul sens de rotation, ce qui fait que le jeu n'est pas rattrapé.

La présente invention propose un procédé et un dispositif pour le rattrapage automatique de jeux dans un système de transmission à engrenages, d'une réalisation simple, facile à mettre en oeuvre et agissant quel que soit le sens de rotation des engrenages.

Plus précisément, la présente invention a pour objet un procédé pour rattraper automatiquement les jeux dans les systèmes de transmission à engrenages comportant au moins un arbre menant sur lequel est calé un pignon engrenant avec un pignon lié à un arbre mené, consistant en ce que :

on associe à l'un des pignons au moins deux roues dentées centrées sur l'arbre auquel est lié ledit pignon et disposées de part et d'autre de cedit pignon, ces roues ayant le même diamètre et le même nombre de dents que ledit pignon associé et étant en prise avec l'autre pignon, lesdites roues n'étant pas liées en rotation à l'arbre sur lequel elles sont centrées,

on lie chacune des roues au pignon situé entre elles par un accouplement élastique, et

on soumet chacune des roues à une contrainte élastique réalisant un décalage angulaire de chaque roue par rapport au pignon situé entre elles, caractérisé par le fait que le décalage angulaire d'une roue est effectué en sens inverse du décalage angulaire de l'autre roue.

La présente invention a aussi pour objet un dispositif de rattrapage automatique de jeu mettant en oeuvre le procédé décrit ci-dessus et utilisable dans un système de transmission à engrenages, comportant au moins un arbre menant et arbre mené solidaires des pignons en prise, l'un des pignons étant monté entre deux roues centrées sur l'arbre auquel est lié ledit pignon, et sans être liées en rotation à cet arbre, lesdites roues étant de même diamètre et ayant le même nombre de dents que ledit pignon, chaque roue étant liée au pignon par des broches parallèles à l'arbre, des moyens de contrainte élastique des broches étant prévus pour assurer, à l'état de repos, un décalage angulaire de chaque roue par rapport au pignon, caractérisé par le fait que lesdits moyens de contrainte élastique agissent sur les broches de l'une des roues pour assurer un décalage de cette roue dans un sens de rotation et qu'ils agissent sur les broches de l'autre roue en sens inverse.

La présente invention a aussi pour objet un procédé de fabrication du dispositif défini ci-dessus, caractérisé en ce que :

sur un arbre, on fixe en position un pignon non taillé,

on monte de part et d'autre du pignon les roues non taillées que l'on maintient temporairement immobiles par rapport à l'arbre avec un écrou,

on perce deux séries de trous communs respectivement au pignon et à chacune des roues,

on introduit dans chaque série de trous des plots élastiques reliant le pignon à chacune des roues,

on provoque contre l'action de rappel élastique des plots un décalage angulaire faible de chaque roue en sens inverse par rapport au pignon, l'ensemble étant bloqué temporairement dans cette position décalée,

on procède à la taille simultanée du pignon et des roues, et on supprime l'action ayant provoqué le décalage angulaire des roues.

On décrira, à titre d'exemple non limitatif, une forme de réalisation de l'invention, en référence aux données annexes dans lesquelles :

la Figure 1 est une vue en coupe d'un système de transmission à rattrapage automatique de jeu selon l'invention,

la Figure 2 est une vue de face du système de la Figure 1,

la Figure 3 est un détail à plus grande échelle montrant le décalage d'une dent des roues par rapport au pignon,

la Figure 4 est un détail représentant le système en fonctionnement,

la Figure 5 montre une étape de fabrication d'un système selon l'invention,

la Figure 6 montre un schéma d'un réducteur droit à deux étages équipé du système de l'invention, et

les Figures 7A et 7B sont des schémas d'un système de transmission à rattrapage automatique de jeu particulièrement avantageux.

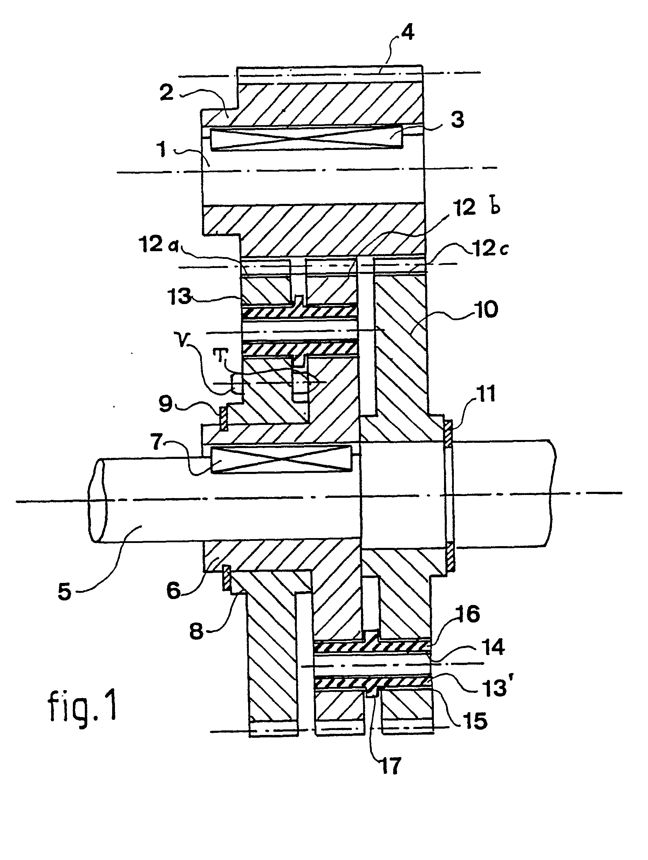

la figure 1 représente en 1 un arbre d'entraînement ou arbre menant sur lequel est fixé par une clavette 3 un pignon 2 dont la denture est schématisée en 4. Le pignon 2 est destiné à entraîner en rotation selon un rapport de démultiplication déterminé un arbre mené 5.

Le dispositif de l'invention prévoit un pignon 6 solidarisé avec l'arbre 5 par une clavette 7 et deux roues 8 et 10 disposées de part et d'autre du pignon 6, de même diamètre et du même nombre de dents que celui-ci. La roue 8 est montée sur une collerette du pignon 6, sans être liée en rotation à celui-ci. Un anneau d'arrêt 9 immobilise la roue 8 en translation. De même, la roue 10 est montée sur l'arbre 5 sans être liée en rotation à celui-ci, mais immobilisée en translation par un anneau d'arrêt 11.

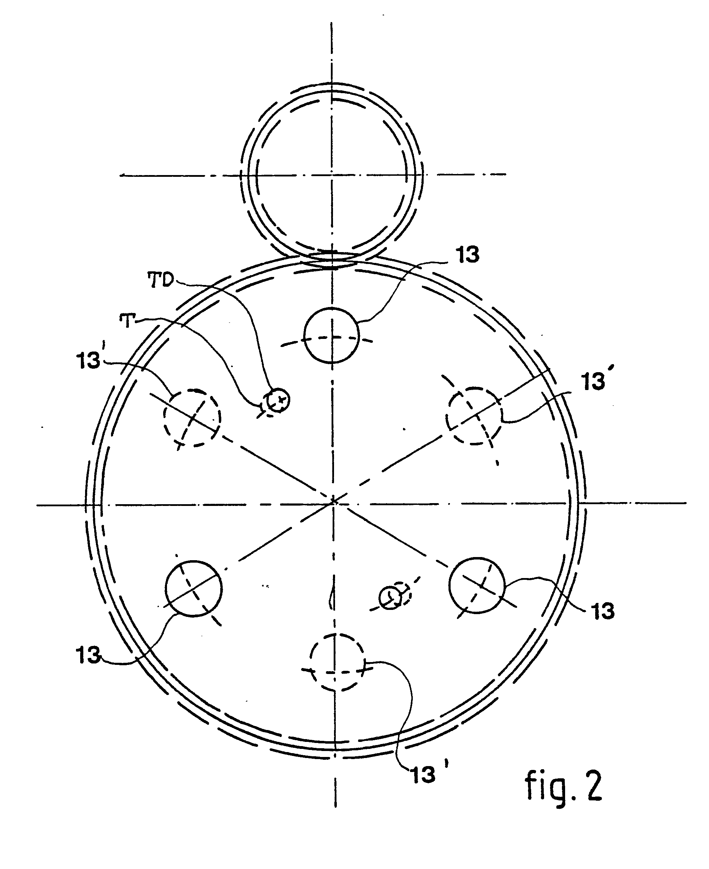

La liaison en rotation du pignon 6 avec la roue 8 est réalisée par une série de broches ou plots 13 en un matériau élastique répartie de façon équidistante, comme le montre la Figure 2, pour éliminer tout balourd. Il y a trois plots 13 dans la forme de réalisation représentée, mais ce nombre n'est pas limitatif.

De même, la liaison en rotation du pignon 6 avec la roue 10 est réalisée par une série de plots 13' identiques aux plots 13.

Les broches ou plots, 13, 13' sont réalisés en une matière élastiquement déformable telle que caoutchouc naturel ou synthétique, matière plastique ou autre, de façon à présenter une rigidité et une élasticité adaptées. Ces broches pourront, par exemple, avoir une forme tubulaire, comme représenté, avec manchon interne 14 métallique recouvert d'une couche élastique 16 revêtue de même de deux petits manchons métalliques 15 à collerettes ménageant entre elles en intervalle pour une nervure 17 de matière élastique.

La broche 13, 13' est ajustée à force dans deux trous en vis-à-vis pratiqués dans le pignon 6 et les roues 8 et 10. Chacun des plots 13, 13' est soumis à une pré-contrainte élastique qui peut résulter de la forme même du plot qui, à l'état de repos, présenterait, sur sa longueur, un axe courbe, ou bien d'une mise en tension après mise en place, par exemple grâce à une vis conique engagée dans deux trous taraudés décalés pratiqués dans le pignon et la roue.

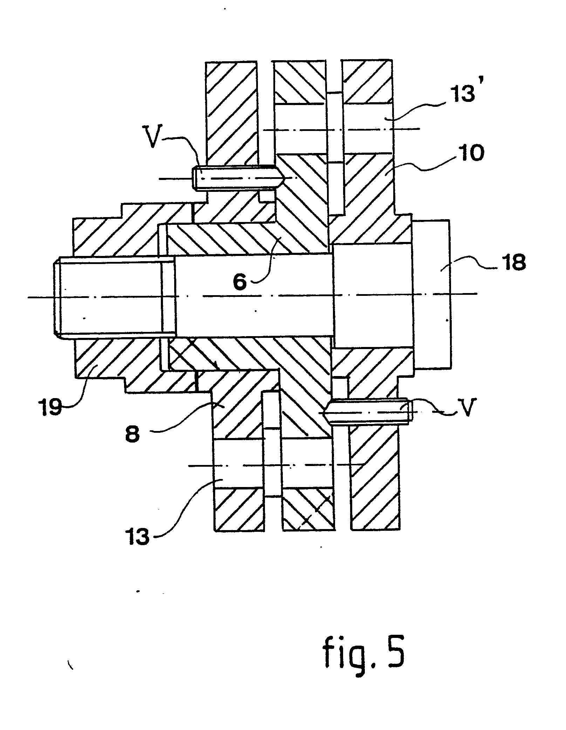

Ainsi, la fabrication du système de l'invention pourrait se dérouler selon le processus figuré partiellement à la Figure 5. Dans une première phase, on cale le pignon 6 sur un arbre 18, la denture du pignon n'étant pas encore taillée. On place ensuite les roues 8 et 10 non taillées en les immobilisant temporairement en rotation et en translation par rapport à l'arbre 18, au moyen d'un écrou 19.

On perce les trous en regard destinés à recevoir les plots 13 et 13' que l'on insère dans lesdits trous. On réalise la mise sous contrainte des plots, en provoquant un léger décalage angulaire entre le pignon et les roues, dans des sens contraires. Cela peut se faire par vissage d'une vis V engagée dans un trou taraudé TD de la roue 6 à l'intérieur un trou T pratiqué dans le pignon 6 et décalé angulairement de la quantité voulue.

Naturellement, cette vis V ne sert qu'au montage et est ensuite ôtée, quand le système est en fonctionnement. Les plots étant sous contrainte, on taille simultanément les dentures du pignon 6 et des roues 8 et 10.

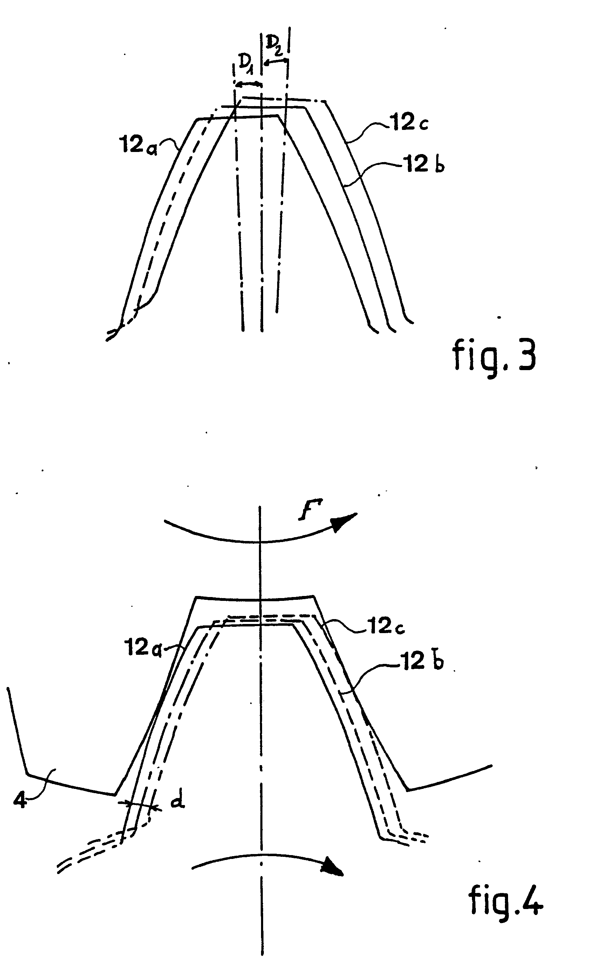

La vis V enlevée, sous l'action élastique des plots 13 et 13', les dentures se décalent comme représenté sur la Figure 3 où l'on a représenté en 12b une dent du pignon, en 12a et 12c une dent correspondante des roues 8 et 10. Comme on le voit, la dent 12a est décalée d'un angle D1 dans le sens senestrorsum et la dent 12c d'un angle D2 dans le sens dextrorsum par rapport à la dent 12b.

En fonctionnement, les dents se placent comme représenté à la Figure 4. Lorsque les dents 4 du pignon menant tournent dans le sens de la flèche F, les dents 4 viennent en contact avec les dents 12b du pignon 6 provoquant un entraînement positif de l'arbre 5. La dent 12a se trouve escamotée derrière la dent 12b contre l'action des plots 13. En revanche, la dent 12c est poussée par les plots 13' au contact de la dent 4 suivante, rattrapant ainsi le jeu entre les pignons.

Au changement de sens de rotation, on obtiendra la disposition inverse.

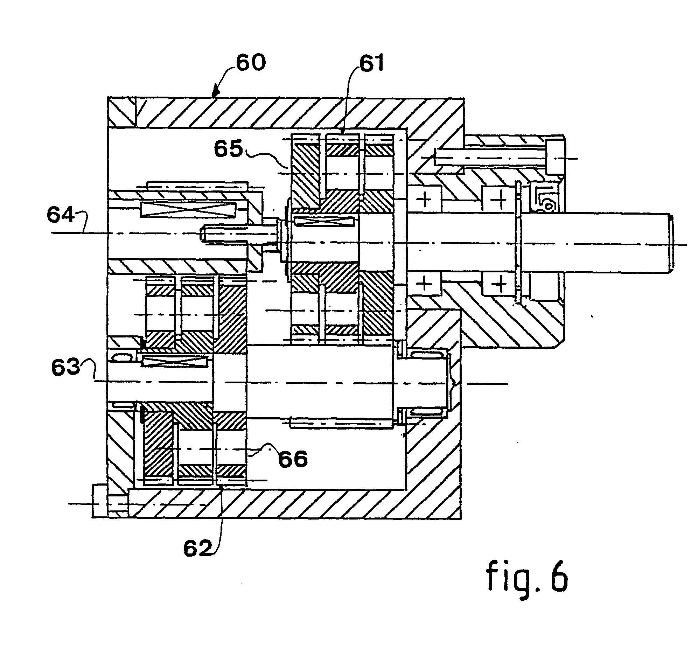

Le système de l'invention peut trouver des applications pour toutes sortes de transmissions à engrenages. A titre d'exemple, la Figure 6 représente un réducteur 60 comprenant deux étages 61 et 62 permettant de coupler deux axes 63 et 64 dans un rapport déterminé, pour pouvoir, par exemple, commander le déplacement très précis et surtout fidèle d'un bras de robot. Ces deux étages 61 et 62 comportent respectivement un dispositif 65 et 66 de rattrapage de jeu selon l'invention.

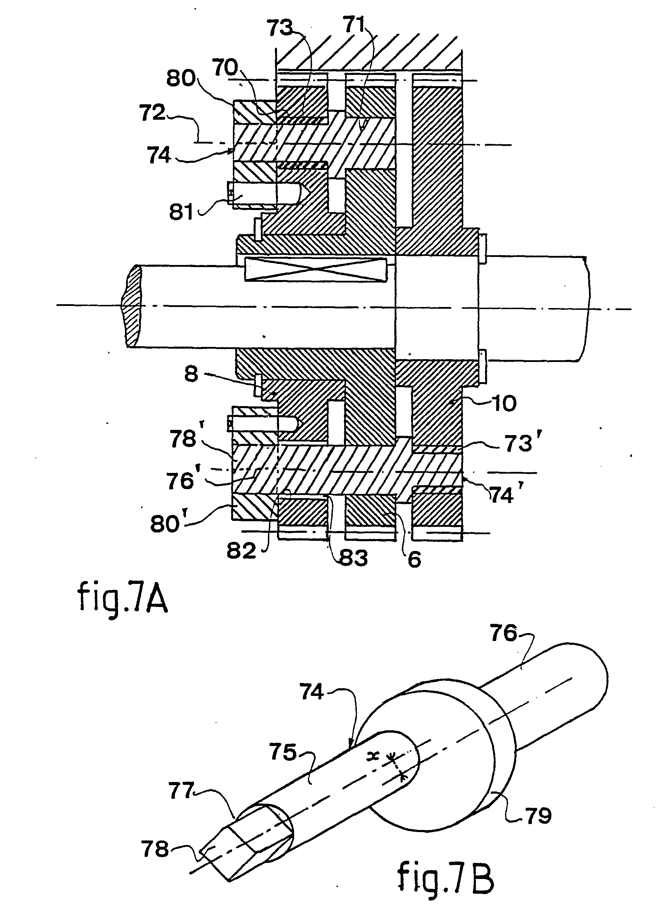

Les Figures 7A et 7B représentent une disposition particulièrement avantageuse du système de rattrapage automatique de jeu dans les transmissions à engrenages, et plus particulièrement dans la structure de la broche (ou plot) 13, 13' ayant une fonction élastique pour tendre à décaler angulairement, respectivement dans deux sens opposés, les deux roues 8 et 10 du pignon 6.

Dans ce mode de réalisation, la roue 8 et le pignon 6 sont respectivement percés par deux orifices 70 et 71 suivant un même axe 72 (Figure 7A). L'orifice 70 de la roue 8 est chemisé par un manchon 73 en un matériau rigide mais résilient, comme par exemple du matériau composite. Ensuite, dans ces deux orifices, est placé un arbre-double 74 (Figure 7B) comportant deux arbres 75 et 76 dont les axes sont décalés d'une distance « x », l'arbre 75 ayant le même diamètre que le diamètre intérieur du manchon 73, tandis que l'arbre 76 a le même diamètre que celui de l'intérieur de l'orifice 71. Il est à noter que l'extrémité 77 de l'arbre-double 74 comporte un carré de blocage 78. Avantageusement, un épaulement 79 est prévu entre les deux arbres 75 et 76, pour pouvoir être intercalé entre la roue 8 et le pignon 6.

Dans ce cas, pour le montage, l'arbre-double 74, est positionné dans les deux orifices, l'épaulement entre la roue 8 et le pignon 6, l'arbre 75 dans le manchon 73 et l'arbre 76 dans l'orifice 71 du pignon 6. Puis, on fait subir à cet arbre-double une rotation, par exemple de 180 degrés, pour décaler la roue 8 du pignon 6, en déformant élastiquement le manchon 73. De ce fait, la roue 8 est décalée du pignon 6, comme décrit précédemment. Bien entendu, une contre-plaque 80 emprisonnant le coin de blocage 78 est alors fixée par tous moyens 81 à la roue 8 pour maintenir la position de l'arbre-double 74 et la position angulaire de la roue 8 par rapport au pignon 6.

Ce système donne toute satisfaction, car il permet, en plus, de régler la position angulaire des deux roues 8 et 10 par rapport au pignon 6, d'un même côté. En effet, comme représenté sur la Figure 7A, la position de la roue 8 par rapport au pignon 6 est obtenue au moyen du carré de blocage émergeant de la roue 8 et solidaire de l'arbre 75 coopérant avec le manchon 73. Par contre, l'arbre-double 74' positionnant la roue 10 par rapport au pignon 6 a son axe 76' traversant par un orifice 82 avec suffisamment de jeu 83 la roue 8 et le carré de blocage 78' coopère alors avec une contre-plaque 80' qui est ainsi elle-même solidarisée avec la roue 8.

**Revendications**

1. Procédé pour rattraper automatiquement les jeux dans les systèmes de transmission à engrenages comportant au moins un arbre (1) menant sur lequel est calé un pignon (2) engrenant avec un pignon (6) lié à un arbre mené (5), consistant en ce que :

on associe à l'un des pignons (6) au moins deux roues dentées (8, 10) centrées sur l'arbre (5) auquel est lié ledit pignon (6) et disposées de part et d'autre de cedit pignon (6), ces roues (8, 10) ayant le même diamètre et le même nombre de dents que ledit pignon (6) associé et étant en prise avec l'autre dit pignon (2), lesdites roues n'étant pas liées en rotation à l'arbre sur lequel elles sont centrées,

on lie chacune des roues (8, 10) au pignon (6) situé entre elles par un accouplement élastique (13, 13'), et

on soumet chacune des roues (8, 10) à une contrainte élastique réalisant un décalage angulaire (D1, D2) de chaque roue (8, 10) par rapport au pignon (6) situé entre elles, caractérisé par le fait que le décalage angulaire (D1) d'une roue (8) est effectué en sens inverse du décalage angulaire (D2) de l'autre roue (10).

2. Dispositif de rattrapage de jeu automatique mettant en oeuvre le procédé selon la revendication 1 et utilisable dans un système de transmission à engrenages comportant au moins un arbre menant (1) et un arbre mené (5) solidaires des pignons en prise, l'un des pignons (6) étant monté entre deux roues (8, 10) centrées sur l'arbre (5) auquel est associé ledit pignon sans être liées en rotation à cet arbre, lesdites roues étant de même diamètre et ayant le même nombre de dents que ledit pignon (6), chaque roue (8, 10) étant liée au pignon (6) par des broches (13, 13') parallèles à l'arbre, des moyens de contrainte élastique des broches étant prévus pour assurer, à l'état de repos, un décalage angulaire (D1, D2) de chaque roue (8, 10) par rapport au pignon (6), caractérisé par le fait que les moyens de contrainte élastique agissent sur les broches (13, 13') de l'une des roues pour assurer un décalage de cette roue dans un sens de rotation et qu'ils agissent sur les broches de l'autre roue en sens inverse.

3. Dispositif selon la revendication 2, caractérisé en ce que les broches (13, 13') sont constituées par des plots de forme cylindrique emmanchés à force dans des trous correspondants du pignon (6) et de la roue (8, 10).

4. Dispositif selon l'une quelconque des revendications 2 et 3, caractérisé en ce que l'accouplement de chaque roue au pignon est réalisé par plusieurs broches (13, 13') réparties de façon équidistante.

5. Dispositif selon l'une quelconque des revendications 2 à 4, caractérisé en ce que les moyens de contrainte des broches (13, 13') est assuré par une déformation élastique permanente desdites broches dans le sens de leur longueur.

6. Dispositif selon la revendication 2, caractérisé en ce que ledit accouplement élastique (13, 13') comporte deux orifices réalisés respectivement dans une roue (8, 10) et le pignon (6), un arbre-double (74, 74') comprenant deux arbres (75, 76) excentrés, séparés par un épaulement (79) situé entre ladite roue et ledit pignon, un manchon (73, 73') disposé dans l'orifice réalisé dans la roue (8, 10), ledit arbre-double (74) ayant ses deux arbres (75, 76) situés respectivement dans ledit manchon et dans ledit orifice dudit pignon et des moyens pour bloquer ledit arbre-double par rapport à ladite roue.

7. Dispositif selon la revendication 6, caractérisé en ce que ledit manchon (73, 73') est réalisé en un matériau composite résilient.

8. Procédé de fabrication du dispositif selon l'une des revendications précédentes 2 à 7, caractérisé en ce que :

sur un arbre (18), on fixe en position un pignon (6) non taillé,

on monte de part et d'autre du pignon les roues (8, 10) non taillées que l'on maintient temporairement immobiles par rapport à l'arbre (18) avec un écrou (19),

on perce deux séries de trous communs respectivement au pignon et à chacune des roues,

on introduit dans chaque série de trous des plots (13, 13') élastiques reliant le pignon (6) à chacune des roues (8, 10),

on provoque contre l'action de rappel élastique des plots un décalage angulaire faible (D1, D2) de chaque roue (8, 10) en sens inverse par rapport au pignon (6) l'ensemble étant bloqué temporairement dans cette position décalée,

on procède à la taille simultanée du pignon (6) et des roues (8, 10), et

on supprime l'action ayant provoqué le décalage angulaire des roues.

9. Procédé selon la revendication 8, caractérisé en ce que l'action provoquant le décalage des roues avant la taille est obtenue par engagement d'une vis (V) agissant entre chacune des roues (8, 10) et le pignon (6).

**Claims**

1. Method of automatically taking up backlash in gear transmission systems comprising at least one drive shaft (1) having a gear wheel (2) fixed to rotate therewith, said gear wheel (2) meshing with a gear wheel (6) connected to a driven shaft (5), the method comprising the steps of :

associating at least two toothed wheels (8, 10) with one of said gear wheels (6), said toothed wheels being centered on the shaft (5) to which said gear wheel (6) is connected, and being disposed on either side of said gear wheel (6), said toothed wheels (8, 10) having the same diameter and the same number of teeth as the associated gear wheel (6) and meshing with said other gear wheel (2), said toothed wheels being free to rotate relative to the shaft on which they are centered,

connecting each of said toothed wheels (8, 10) to said gear wheel (6) situated therebetween by resilient coupling means (13, 13'), and

subjecting each of said toothed wheels (8, 10) to resilient stress tending to offset each toothed wheel through an angle (D1, D2) relative to the gear wheel (6) situated between them, characterized by the fact that the angular offset (D1) of a toothed wheel (8) is in the opposite direction of the angular offset (D2) of the other toothed wheel (10).

2. Device for automatically taking up backlash using the method according to Claim 1 in a gear transmission system including at least one drive shaft (1) and at least one driven shaft (5) which are locked with the meshing gear wheels, one of said gear wheels (6) being mounted between two wheels (8, 10) centered on said shaft (5) on which is associated the said gear wheel without being connected in rotation to said shaft, said wheels having the same diameter and the same number of teeth as the said gear wheel (6), each wheel (8, 10) being connected to said gear wheel (6) by respective pegs (13, 13') extending parallel to said shaft, resilient peg-stressing means being provided for insuring, in the rest state, an angular offset (D1, D2) of each wheel (8, 10) relative to the gear wheel (6), characterized by the fact that the resilient stressing means acts on the pegs (13, 13') of one of the wheels to insure an offset of this wheel in a rotating direction and that they act on the pegs of the other wheel in opposite direction.

3. Device according to Claim 2, characterized by the fact that the pegs (13, 13') are constituted by cylindrical tabs which are force-fitted in corresponding holes in the gear wheel (6) and in the wheel (8, 10).

4. Device according to any one of Claims 2 and 3, characterized by the fact that each wheel is coupled to the gear wheel by a plurality of uniformly spaced pegs (13, 13').

5. Device according to any one of Claims 2 to 4, characterized by the fact that said peg-stressing means are provided by a permanent resilient deformation of said pegs in their lengthwise direction.

6. Device according to Claim 2, characterized by the fact that said resilient coupling means (13, 13') comprises two orifices, one being made through a wheel (8, 10) and the other being made through the gear wheel (6), a two-part shaft (74, 74') comprising two excentric shafts (75, 76) which are interconnected end-to-end by a shoulder (79) which is located between said wheel and said gear wheel, a sleeve (73, 73') which is disposed in the orifice made through the wheel (8, 10), said two-part shaft (74) having its two shafts (75, 76) respectively situated in said sleeve and in said orifice through said gear wheel, and means being provided to lock said two-part shaft relative to said wheel.

7. Device according to Claim 6, characterized by the fact that said sleeve (73, 73') is made of resilient composite material.

8. A manufacturing process of the device according to any one of Claims 2 to 7, characterized by the fact that it consists of :

fixing in position a gear wheel (6) on a shaft (18), prior to cutting the teeth therein,

mounting the wheels (8, 10) prior to cutting the teeth therein, each on either side of the gear wheel, the wheels being temporarily fixed relative to said shaft (18) by means of a nut (19),

facing two series of holes in common through the gear wheel and each wheel,

inserting resilient tabs (13, 13') into each group of holes for coupling the gear wheel (6) with each wheel (8, 10),

causing a light angular offset (D1, D2) upon each wheel (8, 10) against the peg resilient drawback, in opposite direction relative to said gear wheel (6) and the whole being temporarily locked in this offset position,

cutting simultaneously teeth on the gear wheel (6) and the wheels (8, 10), and

cancelling the angular offset cause of the wheels.

9. Process according to Claim 8, characterized by the fact that the angular offset cause of the wheels prior to cutting the teeth therein is provided by engaging a screw (V) acting between each wheel (8, 10) and the gear wheel (6).

**Patentansprüche**

1. Verfahren zur automatischen Spielbeseitigung in Zahnradgetrieben mit wenigstens einer Antriebswelle (1), auf der ein Ritzel (2) festgeklemmt ist, das mit einem mit einer Abtriebswelle (5) verbundenen Ritzel (6) kämmt, das darin besteht, dass einem der Ritzel (6) wenigstens zwei Zahnräder (8, 10) zugeordnet werden, die auf der das genannte Ritzel (6) tragenden Welle (5) zentriert und beiderseits dieses Ritzels (6) angeordnet sind, wobei diese Räder (8, 10) denselben Durchmesser und dieselbe Zähnezahl wie das zugeordnete Ritzel (6) aufweisen und mit dem anderen vorgenannten Ritzel (2) in Eingriff stehen, und die genannten Räder nicht drehfest mit der Welle verbunden sind, auf der sie zentriert sind ; dass jedes der Räder (8, 10) mit dem zwischen diesen befindlichen Ritzel (6) durch eine elastische Kupplung (13, 13') verbunden wird, und dass jedes der Räder (8, 10) einer elastischen Beanspruchung unterworfen wird, die eine Winkelverschiebung (D1, D2) jedes Rades (8, 10) im Verhältnis zum zwischen ihnen liegenden Ritzel (6) bewirkt, dadurch gekennzeichnet, dass die Winkelverschiebung (D1) des einen Rades (8) der Winkelverschiebung (D2) des anderen Rades (10) entgegengerichtet ist.

2. Vorrichtung zur automatischen Spielbeseitigung unter Durchführung des Verfahrens nach Anspruch 1, die in einem Zahnradgetriebe verwendbar ist, das wenigstens eine Antriebswelle (1) und eine Abtriebswelle (5) umfasst, die fest mit miteinander kämmenden Ritzeln verbunden sind, wobei das eine Ritzel (6) zwischen zwei Rädern (8, 10) angeordnet ist, die zentrisch auf der dem genannten Ritzel zugeordneten Welle (5) sitzen, ohne drehfest mit dieser Welle verbunden zu sein ; die genannten Räder denselben Durchmesser und dieselbe Zähnezahl wie das genannte Ritzel (6) aufweisen und jedes Rad (8, 10) durch parallel zur Welle ausgerichtete Spindeln (13, 13') mit dem Ritzel (6) verbunden ist, wobei Mittel zur elastischen Belastung der Spindeln vorgesehen sind, um in der Ruhelage eine Winkelverschiebung (D1, D2) jedes Rades (8, 10) im Verhältnis zum Ritzel (6) zu gewährleisten, dadurch gekennzeichnet, dass die Mittel zur elastischen Belastung auf die Spindeln (13, 13') des einen Rades einwirken, um eine Versetzung dieses Rades in einer Drehrichtung zu erzielen, und dass sie auf die Spindeln des anderen Rades in der entgegengesetzten Richtung wirken.

3. Vorrichtung nach Anspruch 2, dadurch gekennzeichnet, dass die Spindeln (13, 13') von zylindrischen Stopfen gebildet sind, die unter Kraftanwendung in entsprechende Löcher des Ritzels (6) und des Rades (8, 10) eingetrieben sind.

4. Vorrichtung nach einem der vorstehenden Ansprüche 2 und 3, dadurch gekennzeichnet, dass die Kupplung jedes Rades mit dem Ritzel durch mehrere mit gleichem Abstand voneinander verteilte Spindeln (13, 13') erfolgt.

5. Vorrichtung nach einem der vorstehenden Ansprüche 2 bis 4, dadurch gekennzeichnet, dass die Belastung der Spindeln (13, 13') durch eine anhaltende elastische Verformung der genannten Spindeln in deren Längsrichtung gewährleistet wird.

6. Vorrichtung nach Anspruch 2, dadurch gekennzeichnet, dass die elastische Kupplung (13, 13') zwei jeweils in einem Rad (8, 10) und im Ritzel (6) angebrachte Öffnungen aufweist, wobei eine Doppelwelle (74, 74') zwei aussermittige, durch eine zwischen dem genannten Rad und dem Ritzel liegende Schulter (79) voneinander getrennte Wellen (75, 76) umfasst und eine Muffe (73, 73') in der in dem Rad (8, 10) angebrachten Öffnung angeordnet ist, die beiden Wellen (75, 76) der genannten Doppelwelle (74) jeweils in der genannten Muffe und der Öffnung des Ritzels liegen und Mittel zur Arretierung der Doppelwelle gegenüber dem gennanten Rad vorgesehen sind.

7. Vorrichtung nach Anspruch 6, dadurch gekennzeichnet, dass die Muffe (73, 73') aus einem elastischen Verbundwerkstoff besteht.

8. Verfahren zur Herstellung der Vorrichtung nach einem der vorstehenden Ansprüche 2 bis 7, dadurch gekennzeichnet, dass auf einer Welle (18) ein ungeschnittenes Ritzel (6) positioniert wird, dass beiderseits des Ritzels die ungeschnittenen Räder (8, 10) montiert werden, die vorübergehend mit einer Mutter (19) auf der Welle (18) festgesetzt werden, dass zwei jeweils dem Ritzel und jedem Rad gemeinsame Lochreihen eingebohrt werden, dass in jede Lochreihe elastische Stopfen (13, 13') eingebracht werden, die das Ritzel (6) mit jedem der Räder (8, 10) verbindet, dass entgegen der elastischen Rückstellwirkung der Stopfen eine geringfügige gegensinnige Winkelverschiebung (D1, D2) jedes Rades (8, 10) gegenüber dem Ritzel (6) bewirkt wird, wobei die gesamte Einheit vorübergehend in dieser versetzten Stellung arretiert wird, dass das Ritzel (6) und die Räder (8, 10) gleichzeitig geschnitten werden, und dass die die Winkelverschiebung der Räder verursachende Wirkung aufgehoben wird.

9. Verfahren nach Anspruch 8, dadurch gekennzeichnet, dass die die Winkelverschiebung der Räder vor dem Schneiden verursachende Wirkung durch Einsetzen einer Schraube (V) erzielt wird, die zwischen jedem der Räder (8, 10) und dem Ritzel (6) wirksam wird.

fig.1

fig. 2

fig. 3

fig.4

fig. 5

60  61

65

64

63

62  66

fig. 6

fig.7A

fig.7B